# EUROPEAN PATENT APPLICATION

(11) **EP 2 424 159 A1**
(43) Date of publication of application: **29.02.2012**
(21) Application number: 11164700.4
(22) Date of filing: 04.05.2011
(51) Int. Cl.: H04L 12/00, H04M 7/00, H04L 12/56

(54) **Information transmission apparatus, information transmission method, and computer readable medium**

(30) Priority: 31.08.2010 JP 2010194365
(71) Applicant: Kabushiki Kaisha Toshiba, Tokyo 105-8001 (JP)
(72) Inventor: Ide, Kenichi, Tokyo (JP)
(74) Representative: Henkel, Breuer & Partner

(57) **Abstract**

According to one embodiment, an information transmission apparatus includes a generator (37), a transmitter (38), and a controller (36, 44). The generator (37) is configured to generate a packet carrying one or a plurality of frames of encoded data in units of frames. The transmitter (38) is configured to transmit the packet generated by the generator (37) to a transmission path. The controller (36, 44) is configured to control the number of frames carried in a packet generated by the generator (37), based on a detention time of a packet in the transmitter (38).

## Description

Embodiments described herein relate generally to an information transmission apparatus, an information transmission method, and a computer readable medium storing an information transmission program.

As is well known, an information transmission system for transmitting medium data such as video and audio in a home using an information transmission standard such as Bluetooth (registered trademark) is widely available nowadays. For example, this kind of information transmission system is often used to transmit audio data which are reproduced by a digital television broadcast-receiving apparatus to various kinds of speakers constituting a home theater.

However, in this information transmission system, a transmission device may transmit data by encoding (compressing) the data, and a receiver may decode (decompress) the encoded data. In this case, the transmission device may be configured to ensure the transmission quality of information by changing an encoding parameter (compression rate) upon receiving feedback information representing a transmission state of a transmission path from the receiver.

In the information transmission system, an apparatus of the receiver needs to have a function of outputting feedback information representing the transmission state of the transmission path so as to allow an apparatus of the transmission device to control the amount of transmission data, and the apparatus of the transmission device needs to be configured to receive this output.

A general architecture that implements the various features of the embodiments will now be described with reference to the drawings. The drawings and the associated descriptions are provided to illustrate the embodiments and not to limit the scope of the invention.
FIG. 1 is a block configuration diagram for schematically illustrating an example of a home information transmission system according to an embodiment;
FIG. 2 is a block configuration diagram for illustrating an example of a signal processing system of a digital television broadcast-receiving apparatus constituting the home information transmission system according to the embodiment;
FIG. 3 is a block configuration diagram for illustrating an example of a transmission processor and a speaker unit provided in the digital television broadcast-receiving apparatus according to the embodiment;
FIG. 4 is a diagram for illustrating an example of a structure of a packet transmitted in the home information transmission system according to the embodiment;
FIG. 5 is a graph for illustrating an example of operation of a transmission path jitter estimation module provided in the transmission processor according to the embodiment;
FIG. 6 is a graph for illustrating an example of operation of a medium carrying-time determination module provided in the transmission processor according to the embodiment;
FIG. 7 is a graph for illustrating an example of operation of a packet generation condition determination module provided in the transmission processor according to the embodiment;
FIG. 8 is a flowchart for illustrating an example of operation of the transmission path jitter estimation module provided in the transmission processor according to the embodiment;
FIG. 9 is a flowchart for illustrating an example of operation of the medium carrying-time determination module provided in the transmission processor according to the embodiment; and
FIG. 10 is a flowchart for illustrating an example of operation of the packet generation condition determination module provided in the transmission processor according to the embodiment.

Various embodiments will be described hereinafter with reference to the accompanying drawings. In general, according to one embodiment, an information transmission apparatus comprises a generator, a transmitter, and a controller. The generator is configured to generate a packet carrying one or a plurality of frames of encoded data in units of frames. The transmitter is configured to transmit packets generated by the generator to a transmission path. The controller is configured to control the number of frames carried in a packet by the generator, based on a detention time of the packet in the transmitter.

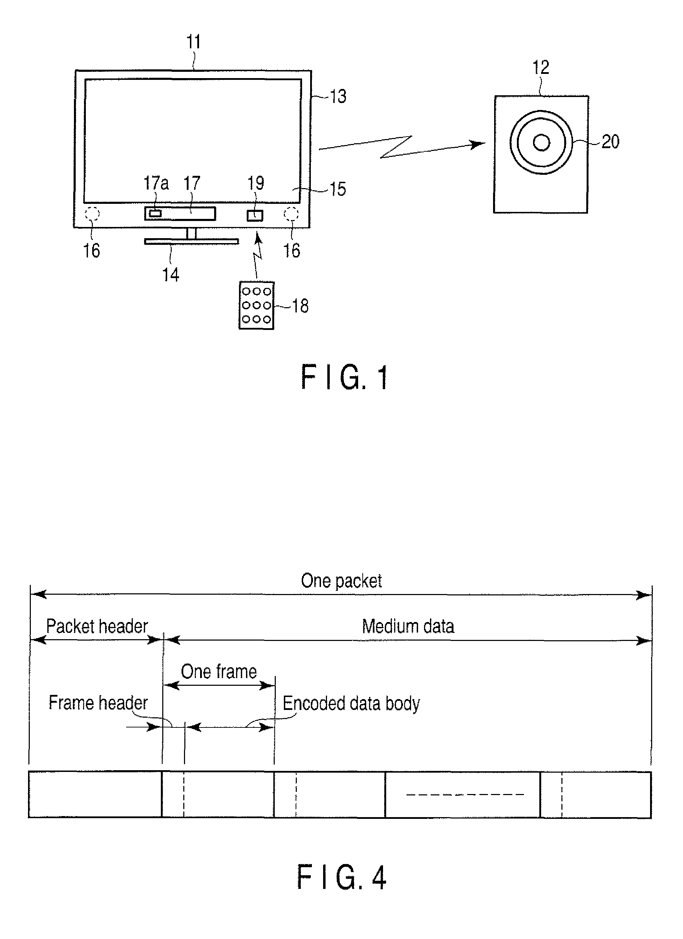

FIG. 1 schematically illustrates a home information transmission system according to the embodiment. The home information transmission system includes a digital television broadcast-receiving apparatus 11 serving as the apparatus of the transmission device and a speaker unit 12 serving as the apparatus of the receiver.

Among them, the digital television broadcast-receiving apparatus 11 includes a thin cabinet 13 and a support table 14 supporting the cabinet 13. A video display module 15 including a liquid crystal display panel and the like is provided at a central portion of a front surface of the cabinet 13, for example.

A pair of speakers 16 is provided at a lower portion of the front surface of the cabinet 13. The speakers 16 can reproduce stereophonic sounds. Further, an operation module 17 and a photoreceiver 19 are provided at the lower portion of the front surface of the cabinet 13. The operation module 17 includes a main power switch 17a. The photoreceiver 19 receives operation information transmitted from a remote controller 18.

The digital television broadcast-receiving apparatus 11 can wirelessly transmit an audio signal reproduced therein in accordance with an information transmission standard such as Bluetooth. The wirelessly transmitted audio data are received and decoded by the speaker unit 12. Thereafter, the audio data are audibly reproduced by a speaker body 20.

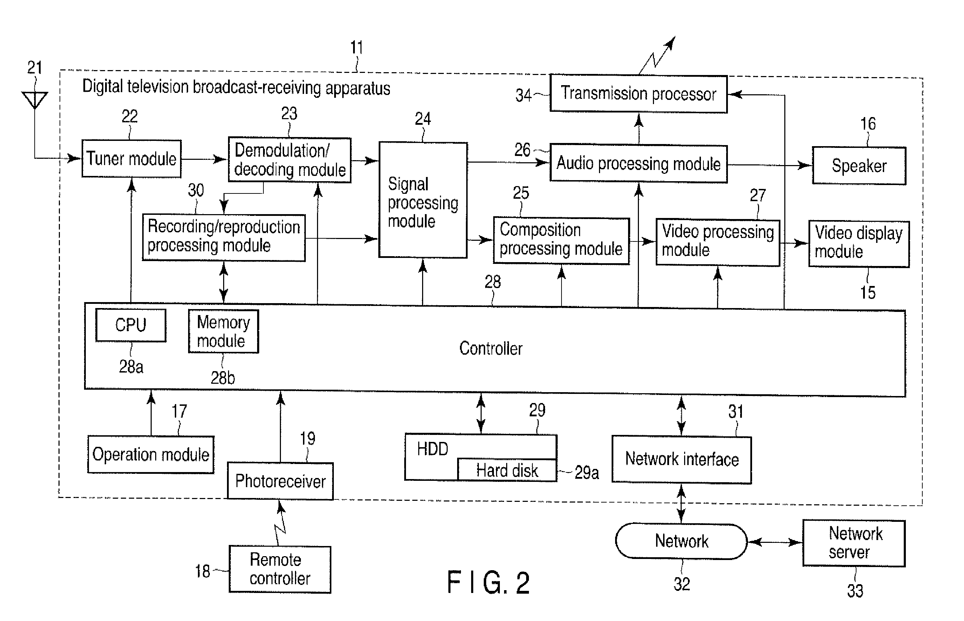

FIG. 2 schematically illustrates a signal processing system of the digital television broadcast-receiving apparatus 11. More specifically, a digital television broadcast signal received by an antenna 21 is provided to a tuner module 22, which tunes in to a broadcast signal of a desired channel. Then, the broadcast signal to which the tuner module 22 tunes in is provided to a demodulation/decoding module 23, and is restored as a digital video signal and a digital audio signal. Thereafter, it is output to a signal processing module 24.

The signal processing module 24 performs predetermined digital signal processing on the digital video signal and the digital audio signal provided from the demodulation/decoding module 23. Then, the signal processing module 24 outputs the digital video signal to a composition processing module 25, and outputs the digital audio signal to an audio processing module 26.

Among them, the composition processing module 25 superimposes an OSD (on screen display) signal onto the digital video signal provided from the signal processing module 24, and outputs the superimposed signal to a video processing module 27. The video processing module 27 converts the received digital video signal into a format for display on the video display module 15 in a later stage. Then, the display video signal output from the video processing module 27 is provided to the video display module 15, and is displayed as a video.

On the other hand, the audio processing module 26 converts the received digital audio signal into an analog audio signal in a format for reproduction with the speaker 16 in a later stage. Then, the analog audio signal output from the audio processing module 26 is provided to the speaker 16, and is reproduced as a sound.

In this case, in the digital television broadcast-receiving apparatus 11, the controller 28 centrally controls all operations including various kinds of reception operations as described above. The controller 28 includes a CPU (central processing unit) 28a. The controller 28 receives operation information provided by the operation module 17, or receives operation information transmitted from the remote controller 18 and received by the photoreceiver 19, and controls each module so as to reflect the content of operation therein.

In this case, the controller 28 uses a memory module 28b. The memory module 28b mainly includes a ROM (read only memory) for storing a control program executed by the CPU 28a, a RAM (random access memory) for providing a work area to the CPU 28a, and a nonvolatile memory for storing various kinds of setting information, control information, and the like.

This controller 28 is connected to an HDD (hard disk drive) 29. Based on operation of the operation module 17 and the remote controller 18 by a user, the controller 28 controls a recording/reproduction processing module 30 so that the digital video signal and the digital audio signal obtained from the demodulation/decoding module 23 are encrypted and converted into a predetermined recording format. The converted signals are provided to the HDD 29, so that a hard disk 29a records the signals.

In addition, based on operation of the operation module 17 and the remote controller 18 by a user, the controller 28 controls the HDD 29 so that the digital video signal and the video audio signal are read from the hard disk 29a, and are decoded by the recording/reproduction processing module 30. Thereafter, the signals are provided to the signal processing module 24, so that the signals are displayed as a video and reproduced as a sound as described above.

The controller 28 is connected to a network interface 31. The network interface 31 is connected to an external network 32. The network 32 is connected to a network server 33 providing various services using a communication function via the network 32.

Accordingly, based on operation of the operation module 17 and the remote controller 18 by a user, the controller 28 performs information communication by accessing the network server 33 via the network interface 31 and the network 32, thus using the services provided by the network server 33.

In this case, the audio processing module 26 provides the received digital audio signal to a transmission processor 34. The transmission processor 34 performs encoding processing and packet generation processing on the received digital audio signal, and thereafter transmits the signal via a wireless transmission path, which will be explained later.

In this case, the transmission processor 34 determines a transmission state of the wireless transmission path by itself, and appropriately controls, based on the determination result, a time needed for making the audio signal into a packet, i.e., a time for generating a packet, and an encoding parameter representing a condition for encoding (compressing) data to be transmitted, and the like, thus transmitting the audio signal with an appropriate transmission rate according to the transmission state of the wireless transmission path.

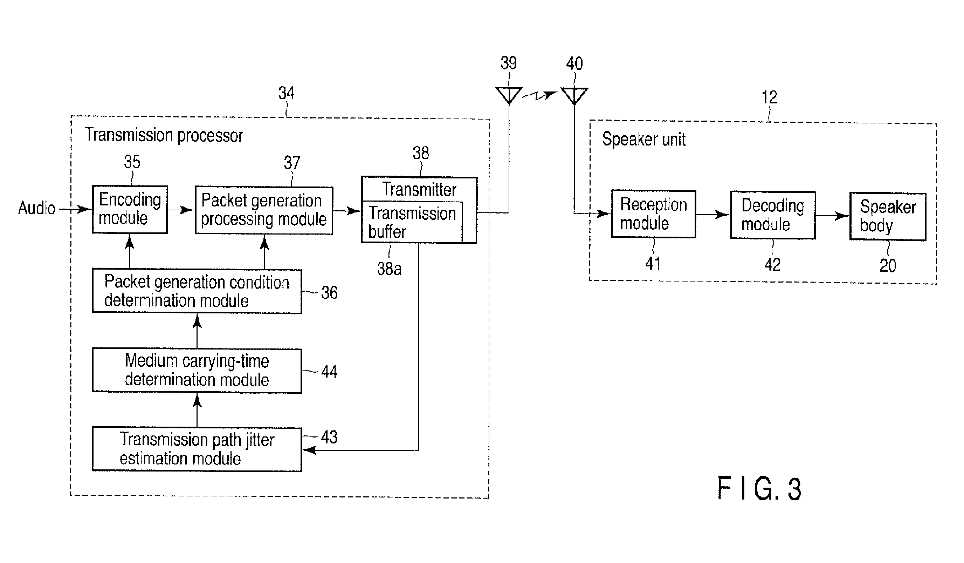

FIG. 3 illustrates an example of the transmission processor 34 and the speaker unit 12. In other words, the digital audio signal output from the audio processing module 26 is provided to an encoding module 35 of the transmission processor 34. The encoding module 35 encodes the received audio signal based on an encoding parameter determined by a packet generation condition determination module 36, thereby generating encoded data in units of frames. For example, in the encoding module 35, SBC (sub band codec) used by A2DP (advanced audio distribution profile) of Bluetooth is used as an encoding method.

The encoded data in units of frames output from the encoding module 35 are provided to a packet generation processing module 37. The packet generation processing module 37 generates a packet including encoded data of the number of included frames, based on the number of carried frames determined by the packet generation condition determination module 36. Then, the packets generated by the packet generation processing module 37 are once stored in a transmission buffer 38a of a transmitter 38, and thereafter, the packets are wirelessly transmitted via an antenna 39.

FIG. 4 illustrates a structure of a packet generated by the packet generation processing module 37. More specifically, a packet includes a packet header and medium data arranged subsequent to the packet header. The medium data includes one or a plurality of frames. For example, A2DP of Bluetooth prescribes that a packet carries one to fifteen frames. One frame includes a frame header and encoded data body arranged subsequent to the frame header. The frame header includes an encoding parameter with which the encoded data body of the frame is encoded.

A packet wirelessly transmitted from the transmission processor 34 as described above is received by a reception module 41 via the antenna 40 of the speaker unit 12, and is decoded by the decoding module 42. Thereafter, the packet is provided to the speaker body 20, and is reproduced as a sound.

While the transmission processor 34 wirelessly transmits the packet to the speaker unit 12 as described above, the transmitter 38 of the transmission processor 34 measures a time from when the packet is stored in the transmission buffer 38a to when the packet is read and transmitted, i.e., a transmission waiting buffer detention time during which the packet is held in the transmission buffer 38a without being transmitted.

When the packet is stored in the transmission buffer 38a, the transmitter 38 measures a time when the packet is stored, and attaches information representing the time of storing to the head portion of the packet. Thereafter, the transmitter 38 measures a transmission time of the packet when the packet is read from the transmission buffer 38a and transmitted, and calculates a difference between the time of storing and the transmission time. In this embodiment, the result of this difference calculation is defined as the transmission waiting buffer detention time, and the transmitter 38 can measure a buffer detention time according to the above procedure.

The transmission waiting buffer detention time measured by the transmitter 38 is provided to a transmission path jitter estimation module 43. The transmission path jitter estimation module 43 calculates the transmission waiting buffer detention time for each packet provided from the transmitter 38 for each predetermined unit time (for example, one second), and obtains a frequency distribution of each transmission waiting buffer detention time obtained in the unit time. In this example, the frequency distribution of each transmission waiting buffer detention time is obtained on every predetermined unit time. However, this invention is not limited thereto. Alternatively, a transmission waiting buffer detention time calculated in a predetermined time may be added to an already obtained frequency distribution of transmission waiting buffer detention time, whereby a frequency distribution may be updated for every predetermined time.

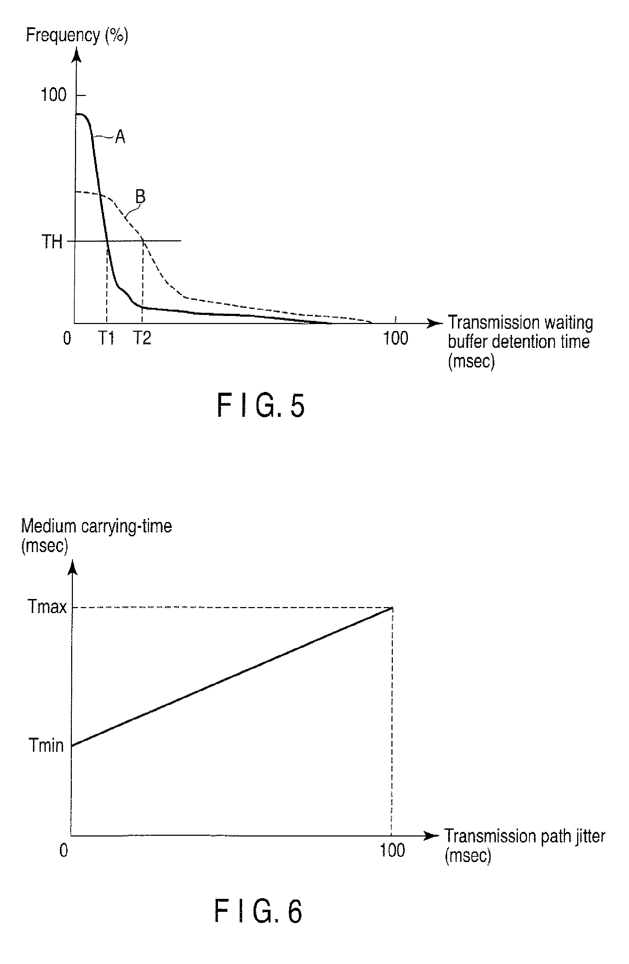

FIG. 5 illustrates an example of correspondence between a transmission waiting buffer detention time obtained on every predetermined unit time by the transmission path jitter estimation module 43 and a frequency thereof. FIG. 5 shows two examples, i.e., a frequency distribution of a transmission waiting buffer detention time represented by a solid line A and a frequency distribution of a transmission waiting buffer detention time represented by a broken line B.

The frequency distribution denoted by the solid line A represents a frequent occurrence of a short transmission waiting buffer detention time, i.e., many of the packets stored in the transmission buffer 38a are transmitted in a short time, which means that the transmission state of the wireless transmission path is good.

On the other hand, the frequency distribution denoted by the broken line B represents that many of the packets stored in the transmission buffer 38a stay in the transmission buffer 38a for a longer time than in the state indicated by the solid line A, which means that the transmission state of the wireless transmission path is not as good as the state indicated by the solid line A.

Then, the transmission path jitter estimation module 43 obtains a transmission waiting buffer detention time at a predetermined frequency TH set in advance (T1 in the frequency distribution denoted by the solid line A, T2 in the frequency distribution denoted by the broken line B). Then, the obtained transmission waiting buffer detention time is estimated as a transmission path jitter representing a transmission state of the wireless transmission path at that moment.

The transmission path jitter obtained by the transmission path jitter estimation module 43 as described above is provided to a medium carrying-time determination module 44. Based on the received transmission path jitter, the medium carrying-time determination module 44 sets the amount of medium data carried in a packet as a medium carrying-time represented by a corresponding time.

FIG. 6 illustrates an example of correspondence between a transmission path jitter obtained by the transmission path jitter estimation module 43 and a medium carrying-time. More specifically, the transmission path jitter is configured to have the following property. When the transmission path jitter is zero, the medium carrying-time becomes a minimum value Tmin set in advance. As the transmission path jitter becomes longer, the medium carrying-time increases up to a maximum value Tmax.

Then, the medium carrying-time determination module 44 provides the medium carrying-time thus set to the packet generation condition determination module 36. The packet generation condition determination module 36 generates, based on the received medium carrying-time, the encoding parameter provided to the encoding module 35 and the number of carried frames provided to the packet generation processing module 37.

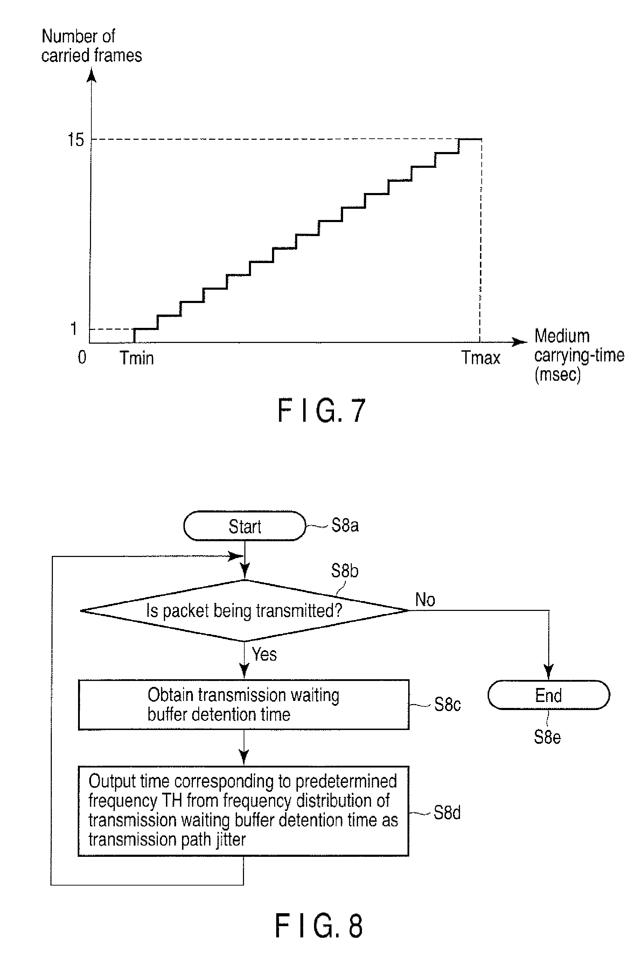

FIG. 7 illustrates an example of correspondence between the medium carrying-time and the number of carried frames. More specifically, the number of carried frames is configured as follows. When the medium carrying-time is the minimum value Tmin, the number of carried frames is the smallest, i.e., one. As the medium carrying-time increases, the number of carried frames increases. When the medium carrying-time is the maximum value Tmax, the number of carried frames is the largest, i.e., fifteen.

Regarding the encoding parameter provided to the encoding module 35, the encoding parameter prepared in advance according to the medium carrying-time can be provided to the encoding module 35. However, when the encoding parameter is changed in units of frames, this may cause, for example, interruption of reproduced sounds, which makes a listener uncomfortable. To counter this problem, it is effective to use a method for maintaining a constant encoding parameter corresponding to an audio signal, which constitutes at least one type of content. In this case, the packet generation condition determination module 36 receives, from the controller 28, setting information set in advance according to the types of content and user's operations, generates an encoding parameter, and provides the encoding parameter to the encoding module 35.

FIG. 8 illustrates a flowchart summarizing the processing and operation of the transmission path jitter estimation module 43. More specifically, when processing starts (step S8a), the transmission path jitter estimation module 43 determines whether a packet is being transmitted or not in step S8b. When the packet is determined not to be transmitted (NO), the processing is terminated (step S8e).

On the other hand, when the packet is determined to be transmitted in step S8b (YES), the transmission path jitter estimation module 43 obtains the transmission waiting buffer detention time from the transmitter 38 in step S8c, and outputs, as a transmission path jitter, a time corresponding to a predetermined frequency TH calculated from the frequency distribution of the transmission waiting buffer detention time in step S8d. Subsequently, the processing of step S8b is performed.

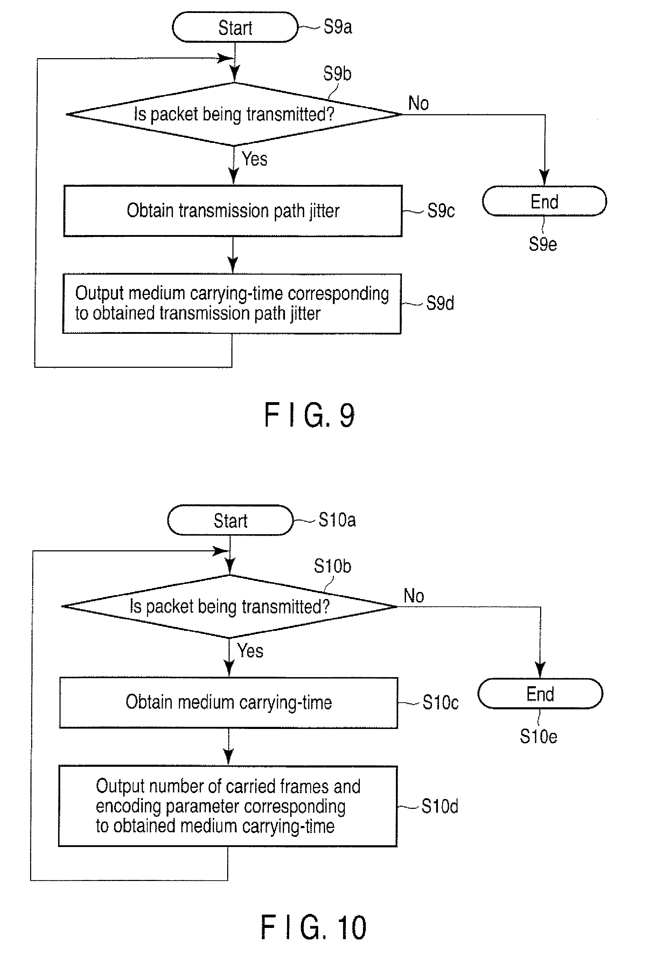

FIG. 9 illustrates a flowchart summarizing processing and operation of the medium carrying-time determination module 44. More specifically, when processing starts (step S9a), the medium carrying-time determination module 44 determines whether a packet is being transmitted or not in step S9b. When the packet is determined not to be transmitted (NO), the processing is terminated (step S9e).

On the other hand, when the packet is determined to be transmitted in step S9b (YES), the medium carrying-time determination module 44 obtains the transmission path jitter output from the transmission path jitter estimation module 43 in step S9c, and outputs a medium carrying-time corresponding to the transmission path jitter obtained from the correspondence between the transmission path jitter and the medium carrying-time prepared in advance in step S9d. Subsequently, the processing of step S9b is performed.

FIG. 10 illustrates a flowchart summarizing processing and operation of the packet generation condition determination module 36. More specifically, when processing starts (step S10a), the packet generation condition determination module 36 determines whether a packet is being transmitted or not in step S10b. When the packet is determined not to be transmitted (NO), the processing is terminated (step S10e).

On the other hand, when the packet is determined to be transmitted in step S10b (YES), the packet generation condition determination module 36 obtains a medium carrying-time output from the medium carrying-time determination module 44 in step S10c, and outputs an encoding parameter and the number of carried frames corresponding to a medium carrying-time obtained from the correspondence between the medium carrying-time, the encoding parameter, and the number of carried frames prepared in advance in step S10d. Subsequently, the processing of step S10b is performed.

According to the embodiment, the transmission state of the wireless transmission path is determined based on the detention time of the packet in the transmission buffer 38a. When the packet detention time is shorter, i.e., the transmission state is better, the carrying-time of the medium data carried in a packet is set at a smaller value, i.e., the number of frames carried in a packet is set at a smaller value. When the packet detention time is longer, i.e., the transmission state is worse, the carrying-time of the medium data carried in a packet is set at a larger value, i.e., the number of frames carried in a packet is set at a larger value.

More specifically, when the transmission state of the wireless transmission path is good, a time needed to structure a packet is reduced, so that a total delay time from when the audio signal is input into the transmission processor 34 to when it is reproduced by the speaker unit 12 as a sound can be reduced. On the other hand, when the transmission state of the wireless transmission path is not good, the carrying-time of the medium data carried in a packet is increased, so that the sound can be reproduced with the least interruption possible. Therefore, information can be transmitted with an appropriate rate suitable for the transmission state of the transmission path.

Moreover, since the transmission state of the wireless transmission path is determined based on the packet detention time in the transmission buffer 38a, it is not necessary to receive feedback information representing the transmission state of the wireless transmission path from the speaker unit 12, i.e., the apparatus of the receiver, and only the transmission device can independently perform operation, which is sufficiently practical.

In the above embodiment, packets are transmitted via the wireless transmission path from the transmission processor 34 to the speaker unit 12. However, it is to be understood that, even when the encoded data are transmitted via a wired transmission path, the configuration as shown in the above embodiment can be applied.

In the above explanation about the embodiment, the audio signal is transmitted. However, the transmitted data are not limited to audio. For example, video, graphic data, and the like may also be transmitted.

## Claims

1. An information transmission apparatus comprising:
a generator (37) configured to generate a packet carrying one or a plurality of frames of encoded data in units of frames;
a transmitter (38) configured to transmit the packet generated by the generator (37) to a transmission path; and
a controller (36, 44) configured to control the number of frames carried in a packet generated by the generator (37), based on a detention time of a packet in the transmitter (38).

2. The information transmission apparatus of Claim 1, further comprising:
an estimation module (43) configured to estimate a transmission state of the transmission path, based on the detention time of the packet held in the transmitter (38),
wherein the controller (36, 44) is configured to control the number of frames carried in a packet generated by the generator (37), based on the transmission state of the transmission path estimated by the estimation module (43).

3. The information transmission apparatus of Claim 1, wherein the controller (36, 44) is configured to control the number of frames carried in a packet generated by the generator (37) so that the number of frames carried in a packet generated by the generator (37) is maintained at a first number of frames when the detention time of the packet held in the transmitter (38) is a first detention time, and
the controller (36, 44) is configured to control the number of frames carried in a packet generated by the generator (37) so that the number of frames carried in a packet generated by the generator (37) is maintained at a second number of frames, which is less than the first number of frames, when the detention time of the packet held in the transmitter (38) is a second detention time, which is shorter than the first detention time.

4. The information transmission apparatus of Claim 2, wherein the transmitter (38) is configured to once store the packet generated by the generator (37) in a buffer (38a), read the packet, and transmit the packet to the transmission path, and
the estimation module (43) is configured to estimate the transmission state of the transmission path, based on the detention time of the packet in the buffer (38a) from when the packet is stored in the buffer (38a) to when the packet is read from the buffer (38a).

5. The information transmission apparatus of Claim 4, wherein the estimation module (43) is configured to calculate a detention time in the buffer (38a) of each packet transmitted from the transmitter (38) at every predetermined time, obtain a frequency distribution of the detention time, and output the detention time corresponding to a frequency set in advance in the frequency distribution, as a transmission path jitter representing the transmission state of the transmission path.

6. The information transmission apparatus of Claim 5, wherein the controller (36, 44) is configured to control the number of frames carried in a packet generated by the generator (37) according to the magnitude of the transmission path jitter output from the estimation module (43).

7. The information transmission apparatus of Claim 5, wherein the controller (36, 44) is configured to control the number of frames carried in a packet generated by the generator (37) such that, the shorter the transmission path jitter output from the estimation module (43), the fewer the number of frames carried in a packet generated by the generator (37), and
the controller (36, 44) is configured to control the number of frames carried in a packet generated by the generator (37) such that, the longer the transmission path jitter output from the estimation module (43), the larger the number of frames carried in a packet generated by the generator (37).

8. The information transmission apparatus of Claim 5, wherein the controller (36, 44) comprises:
a carrying-time setting module (44) configured to set a carrying-time representing a time corresponding to an amount of data carried in a packet such that, the shorter the transmission path jitter output from the estimation module (43), the shorter the carrying-time representing the time corresponding to the amount of data carried in a packet, and configured to set the carrying-time representing the time corresponding to the amount of data carried in a packet such that, the longer the transmission path jitter output from the estimation module (43), the longer the carrying-time representing the time corresponding to the amount of data carried in a packet; and
a frame number setting module (36) configured to set the number of frames carried in a packet generated by the generator (37) such that, the shorter the carrying-time set by the carrying-time setting module (44), the fewer the number of frames carried in a packet generated by the generator (37), and configured to set the number of frames carried in a packet generated by the generator (37) such that, the longer the carrying-time set by the carrying-time setting module (44), the larger the number of frames carried in a packet generated by the generator (37).

9. The information transmission apparatus of Claim 2, further comprising:
an encoding module (35) configured to encode input data, generate encoded data in units of frames, and provide the encoded data to the generator (37),
wherein the controller (36, 44) is configured to control an encoding parameter, with which the encoding module (35) performs encoding, based on the transmission state of the transmission path estimated by the estimation module (43).

10. A information transmission method comprising:
causing a generator (37) to generate a packet carrying one or a plurality of frames of encoded data in units of frames;
causing a transmitter (38) to transmit the packet generated by the generator (37) to a transmission path; and
causing a controller (36, 44) to control the number of frames carried in a packet generated by the generator (37), based on a detention time of a packet in the transmitter (38) (S8c, S8d, S9c, S9d, S10c, S10d) .

11. A non-transitory computer readable medium having stored therein an information transmission program which is executable by a computer, the information transmission program controlling the computer to execute functions of:
generation processing (37) of generating a packet carrying one or a plurality of frames of encoded data in units of frames;
transmission processing (38) of transmitting the packet generated by the generation processing (37) to a transmission path; and
control processing (36, 44) of controlling the number of frames carried in a packet generated by the generation processing (37), based on a detention time of a packet in the transmission processing (38).
